Europäisches Patentamt

European Patent Office

Office européen des brevets

(11) Publication number: **0 344 388**
A1

## (12) EUROPEAN PATENT APPLICATION

(21) Application number: 88500055.4

(51) Int. Cl.⁴: **A22C 11/12**

(22) Date of filing: 03.06.88

(43) Date of publication of application:
06.12.89 Bulletin 89/49

(84) Designated Contracting States:
AT BE CH DE FR GB GR IT LI LU NL SE

(71) Applicant: **Lorenzo Barroso, Angel**
San Pelegrin, 28-38
E-08300 Mataro (Barcelona)(ES)

(72) Inventor: **Lorenzo Barroso, Angel**
San Pelegrin, 28-38
E-08300 Mataro (Barcelona)(ES)

(74) Representative: **Gomez-Acebo y Pombo, José Miguel**
c/o CLARKE, MODET & Co. Balmes, 191
E-08006 Barcelona(ES)

(54) A machine for tying the ends of sausages or the like.

(57) A machine for tying the ends of sausages (6) or the like, characterized in that being fed by a continuous magazine (1) formed by a sheet-like support (2) to which there is adhered a string (3), with preformed slip knots (4), open and arranged to be closed by pulling the string (3), it comprises a support frame which holds a sausage support platform (5), magazine support and haul-off means, means for pulling the string by the midpoint, slip knot throttling means, magazine holding means, means for purging the excess material outside each knot, and drive means for the pulling means and for the magazine holding means.

It allows the simultaneous tying of both ends of one same sausage, so that they may be conventionally attached by one string.

FIG. 6

# A MACHINE FOR TYING THE ENDS OF SAUSAGES OR THE LIKE

This invention relates to a machine for tying the ends of sausages or the like, adapted to be supplied by a continuous magazine in roll form, consisting essentially of a sheet-like support to which a string is adhered, having performed slip knots, which are open and ready to be tied by pulling on the string. The invention also relates to the magazine for such tying machine.

Different types of tying machines are already known, among which may be cited those disclosed in Patents of Invention Nos. 295.446 and 475.086, both granted to the present applicant, which disclose respective embodiments adapted to form and tie a knot around the open end of a sausage skin. To be precise, Patent no. 475.086 also uses magazines in which the string, which is subsequently to be tied around the end of the sausages, is disposed.

Nevertheless, there are certain types of sausages, such as the Catalan pork sausage, which normally have both ends ties with one same string, from which the sausage then hangs folded upon itself substantially in U-shape.

The machine of the present invention, using a magazine in which preformed slip knots are already prepared, allows two of them to be tied around both ends of one same sausage, leaving a stretch of string connecting both ends after having been tied simultaneously, as conventionally effected by hand. This type of machine is, therefore, quite novel and no machine is known which effects the simultaneous tying or knotting of both ends of one same sausage.

Essentially, the tying machine of invention is characterized in that it comprises a frame member supporting a sausage support platform, magazine support and haul-off means, means for pulling the string by the mid-point thereof, throttling means for tying the slip knots, means for holding the magazine, means for discharging the excess material outside each knot, and drive means for the pulling means and for the magazine haul-off means, the support platform being generally horizontal, while the magazine support and haul-off means comprises a vertical plate forming an obtuse dihedral angle, with the convexity facing the supply portion of the sausages to be tied, the vertical mid-plane of symmetry of the unit passing through the vertical edge, there being disposed on the support platform, on both sides of the said vertical plate, a pair of vertically orientated rollers, around one of which there is rotatably disposed the magazine roll, while the other roller drives the roll when a tying cycle in which both ends of the sausage are simultaneously tied with respective knots formed with one same string has occurred, providing a new unit magazine portion for a new cycle, the magazine being urged, in the portion comprised between both rollers, against both sides of the vertical plate, there being formed in each of the faces of the vertical plate an opening adapted to allow therethrough one end of the sausage, and each of said openings corresponding to respective openings formed in the sheet-like support of the magazine and surrounded by the corresponding rings of slip knots, connected by a joining portion, both openings being adapted to receive the two ends of the sausage for simultaneous tying.

According to another feature of the invention, the said magazine holding means is formed by at least one pressing pin, which, when the operator actuates the drive means to perform one work cycle, moves parallelly to the platform and therebelow, until it presses the lower edge of the sheet-like support against the vertical plate of dihedral angle shape, remaining in said pressure position until the end of the cycle, at which time it is returned to its initial rest position.

In accordance with yet a further feature of invention, the said pulling means is formed by a vertically movable pulling rod having pivotably connected to the upper end thereof a head provided with at least one hook adapted to hook the string of the magazine by the mid-point of the joining portion between two rings of a unit magazine portion, causing it to rise on the operative stroke, so that, once the operative cycle has terminated, the rod descends to its lowermost rest position wherein the head thereof is separated from its vertical path, slightly separated from the magazine, so as to allow the free passage of the latter to supply a new unit magazine portion for a new operative cycle.

Essentially, the magazine for string tying machines in question is characterized in that it comprises a sheet-like roll supporting the string, formed preferably by a web of a material such as paper or the like, having two series of perforations, the first series of which is formed by large equal size orifices having a transverse dimension slightly smaller than the width of the web. disposed close to the longitudinal edges of the latter and mutually adjacent and equidistant, while the other series of perforations is formed by small orifices disposed preferably in pairs between each pair of orifices of the first series, said small orifices being adapted to receive corresponding pins of the magazine roll feed devices.

According to yet a further feature of invention, the string is disposed preferably in equal cut lengths, each of which is adhered to the support roll with two circumferential portions surrounding two adjacent orifices of the first series, just on the edge thereof, with a joining portion between both circumferential portions and having respective tangential free end portions extending outwardly from each orifice, there being formed by the piece of string itself, in the connection between the joining portion and each free end portion, an ordinary slip knot, disposed such that the running portion is precisely the joining portion between both knots.

Further features and advantages of the machine for tying the ends of sausages and the like and of the magazine therefor of the present invention will be evident from the following description made in connection with the accompanying drawings which as a non-limiting example illustrate one embodiment thereof.

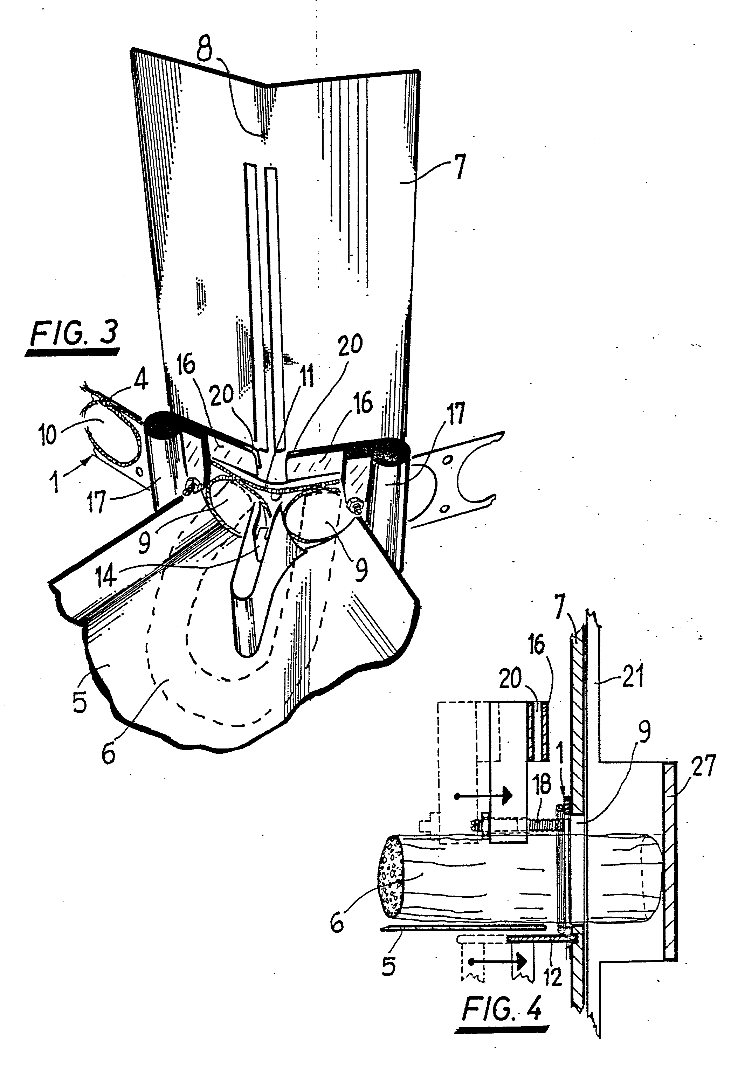

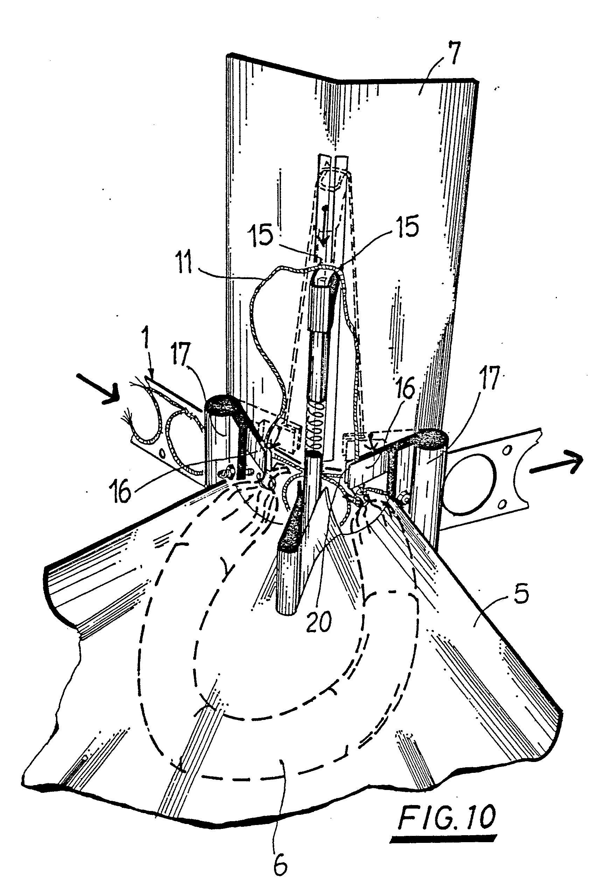

Figures 1, 3, 5, 6 and 10 are corresponding perspective views of the front portion of the machine, in different positions of the operative cycle.

Figures 2 and 4 are respective schematic views, in side elevation and in section of the support plate, support platform, magazine holding means and purge member unit in the rest and operative positions respectively;

Figure 5 is a front elevation view of a part of the magazine, corresponding generally to a unit portion.

Figures 7 and 9 are two perspective views of a rear portion of the machine, corresponding to two intermediate operative positions.

Figures 8 is a cross section view of the support plate and purge member, in the position of the Figure 9.

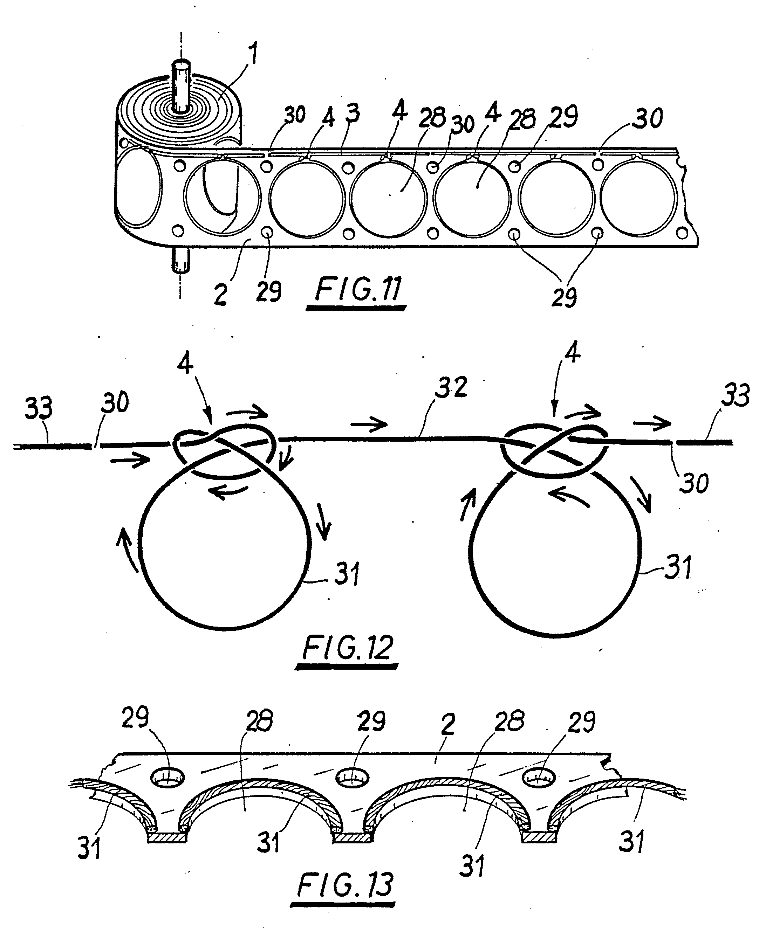

Figure 11 is a perspective view of a magazine roll according to the invention, with an unwound portion;

Figure 12 is a schematic view in detail of the magazine string path in a unit portion; and

Figure 13 is a perspective view, on a slightly larger scale and partly in section, of a portion of the magazine.

In the drawings the machine is seen to be supplied by a continuous magazine 1 in roll form, consisting of a sheel-like support 2 to which there is adhered a string 3, having pre-shaped slip knots 4 open and ready to be closed by pulling the string 3.

The machine is also provided with a frame member holding a support platform 5 for the sausage 6 and support and haul-off means for the magazine 1 comprising a vertical plate 7 forming an obtuse dihedral angle, with the convexity thereof facing the supply portion of the sausages to be tied.

The mean vertical plane of symmetry of the unit passes along the vertical edge 8 of the plate 7.

In each of these faces of the vertical plate 7 there is formed an opening 9 adapted for the passage therethrough of one end of the sausage 6, each of said openings 9 corresponding to the respective openings 10 formed in the sheet-like support 2 of the magazine 1 and surrounded by the corresponding rings of slip knots 4, connected together by a joining portion 11. Both openings 9 are adapted to receive the ends of the sausage 6 for simultaneous tying.

The machine comprises magazine holding means formed by at least one press pin 12 which, when the operator activates the drive means to perform the working cycle, moves parallelly to the platform 5 and therebelow until it presses the lower edge of the sheet-like support 2 in 13 against the vertical plate 7, and remains in said pressure position until the end of the cycle, at which time it returns to its initial rest position.

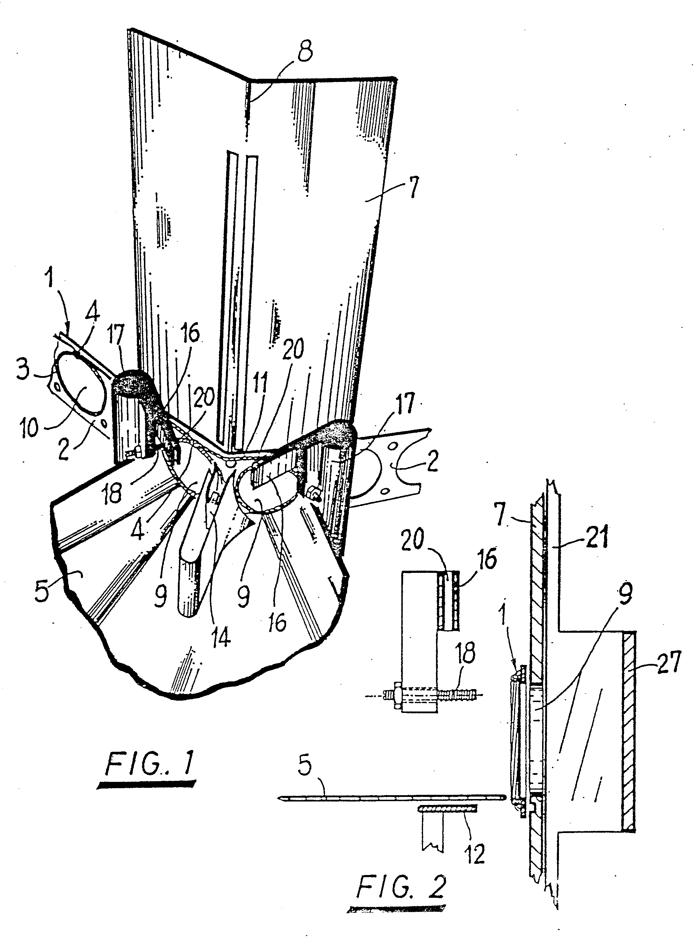

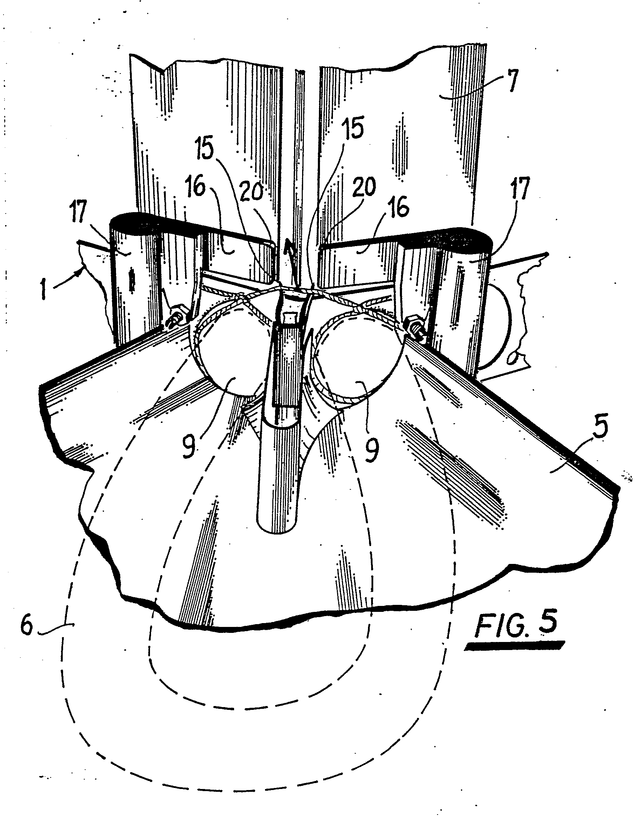

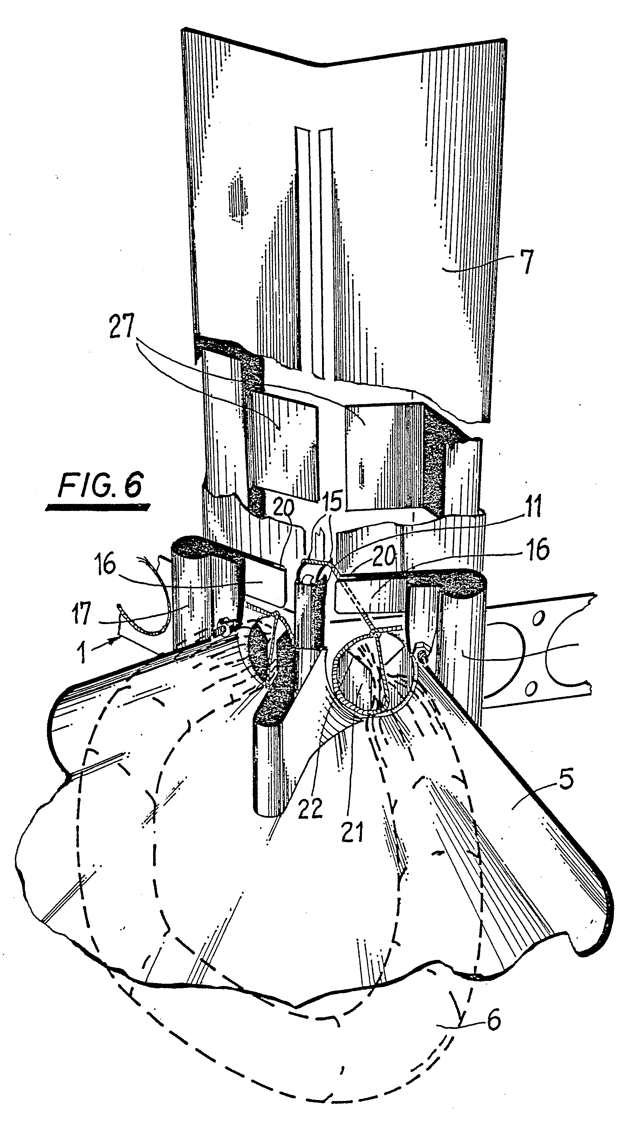

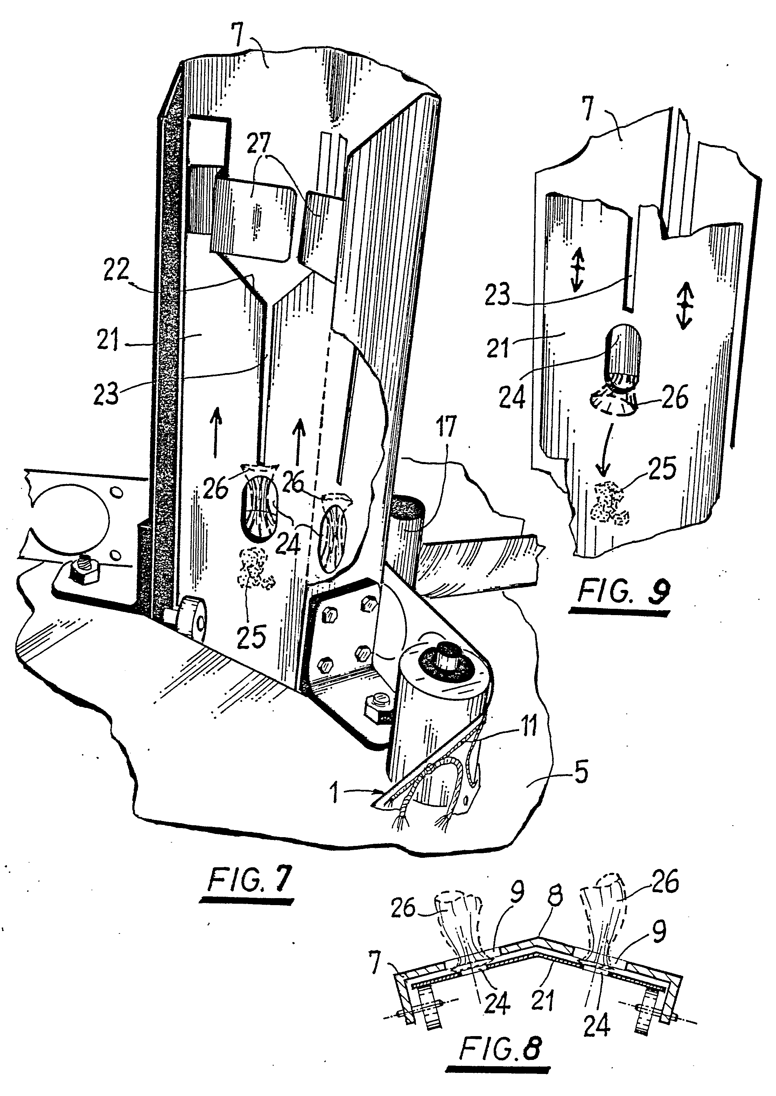

The machine also comprises pulling means formed by a pulling rod 14 capable of vertical movement and which is provided at the upper end thereof with a pivotable head having two hooks 15 adapted to hook the string 13 of the magazine 1 by the mid-point of the joining portion 11 between two rings of a unit portion. In this way, the string 3 is caused to rise on the operative stroke (Figures 5, 6 and 7), and once the operative cycle has terminated, the rod 14 descends (Figure 9) to its lower most rest position (Figure 1) wherein the head thereof is removed from the vertical path thereof, slightly separated from the magazine 1, so as to allow the free passage of the latter to supply a new unit portion for a new operative cycle.

There are also throttling means for the preformed slip knots 4 formed by two like lateral throttling members 16, which are essentially flat and vertically disposed, each of which may rotate around one vertical edge about a vertical shaft 17 from an initial rest position, wherein it is separated outwardly from the support plate 7 of the magazine 1, to an operative position, in which it is generally engaging the said support plate 7 and wherein it presses the upper edge of the magazine 1 against the support plate 7 at the points 19, by way of an adjustable pressure pin 18 disposed therebehind.

Each throttling member 16 is provided on the vertical edge thereof opposite that of rotation with a groove 20 in which one portion of the string 3 is inserted when the latter is raised during the operative stroke by the hooks 15 of the rod 14, said groove 20 being sufficiently wide to allow easy passage of the string 3, but sufficiently narrow to prevent the passage of the corresponding slip knot 4.

The machine in general comprises also purge means for the excess material outside each knot 4, formed by a purge member 21 forming an angle similar to that of the vertical plate 7 of the support and haut-off means, supported therebehind and attached the rod 14 and, therefore, also movable therewith vertically slightly spaced from the rear concave portion of the plate 7.

Each wing of said purge member 21 is provided with a V-shaped upper edge 22, from the lower apex of which there extends downwardly a narrow vertical slot 23.

Below the slot 23 there is a large orifice 24, separated from the slot 23.

The purge member 21 is adapted to move upwards from an initial rest position, in which the upper edge 22 thereof is below the feed plane 5 of the sausage 6, after insertion of the ends of the latter through the openings 9 and 10 of the support plate 7 and through the magazine 1, together with the pulling rod 14, strangling the excess portions of the ends of the sausage 6 outside the slip knot 4 between the openings 9 of the magazine support plate 7 and the slots 23 of the purge member 21. In this way the material 25 contained in the skin in said excess portions is expelled from the skin and falls by gravity behind said purge member 21.

After the bottom of the slot 23 has moved beyond the upper edge of the openings 9, the now empty ends 26 of the sausage skin are inserted between the plate 7 and the member 21, until when the orifices 24 of the latter are aligned with the openings 9 of the plate 7 at the end of the upward movement of the pulling rod 14 and of the member 21, said empty ends 26 of the skin are left free within the said orifices 24 and openings 9.

Each wing of the member 21 is provided on the rear surface thereof with respective stops 27 for abutment of the sausage 6 on insertion, and which in the rest position are facing the respective openings 9 for insertion of the ends of the sausage 6.

The magazine for tying machines of the invention is prepared wound on a sheet-like support roll 1 for the string 3, formed preferably by a web 2 of a material such as paper or the like.

The web 2 is provided with 2 series of perforations, the first of which is formed by large equal sized orifices 28 having a transversal dimension slightly smaller than the width of the web 2, disposed close to the longitudinal edges of the latter and adjacent and equidistant one to another.

The other series of perforations is formed by small orifices 29, preferably disposed in pairs between each pair of orifices 28 of the first series. Said orifices 29 are adapted to receive corresponding pins of supply devices for the magazine roll 1.

The string 3 is disposed preferably in equal cut lengths, separated by small cuts 30, each cut length forming a unit.

Each length of string 3 forming a unit is adhered to the web 2 of the support roll 1, with two circumferential portions 31 surrounding two adjacent orifices 28 of the first series, just above the edge thereof, with a joining portion 32 between both circumferential portions 31 and having respective free end portions 33 extending tangentially outwards from each orifice 28.

In the joint between the portion 32 and each free end portion there is formed by the string an ordinary slip knot 4, prepared in such a way that the running portion is precisely the joining portion 32 between two knots 4.

## Claims

1.- A machine for tying the ends of sausages or the like, characterized in that being fed by a continuous magazine to which there is adhered a string, with preformed slip knots, open and arranged to be closed by pulling the string, it comprises a frame member supporting a sausage support platform, magazine support and haul-off means, means for pulling the string by the midpoint thereof, throttling means for tying the slip knots, means for holding the magazine, means for discharging the excess material outside each knot, and drive means for the pulling means and for the magazine holding means, the support platform being generally horizontal, while the magazine support and haul-off means comprises a vertical plate forming an obtuse dihedral angle, with the convexity facing the support portion of the sausages to be tied, the vertical mid-plane of symmetry of the unit passing through the vertical edge, there being disposed on the support platform, on both sides of the said vertical plate, a pair of vertically orientated rollers, around one of which there is rotatably disposed the magazine roll, while the other roller drives the roll when a tying cycle in which both ends of the sausage are simultaneously tied with respective knots formed with one same string has occurred, providing a new unit magazine portion for a new cycle, the magazine being urged, in the portion comprised between both rollers, against both sides of the vertical plate, there being formed in each of the faces of the vertical plate an opening adapted to allow therethrough one end of the sausage, and each of said openings corresponding to respective openings formed in the sheet-like support of the magazine and surrounded by the corresponding rings of slip knots, connected by a joining portion, both openings being adapted to receive the two ends of the sausage for simultaneous tying.

2.- A tying machine according to claim 1, characterized in that the said magazine holding means is formed by at least one pressing pin, which, when the operator actuates the drive means to perform one work cycle, moves parallelly to the platform and therebelow, until it presses the lower edge of the sheet-like support against the vertical plate of dihedral angle shape, remaining in said pressure position until the end of the cycle, at which time it is returned to its initial rest position.

3.- A tying machine according to claim 1, characterized in that the said pulling means are formed by a vertically movable pulling rod having pivotably connected to the upper end thereof a head provided with at least one hook adapted to hook the string of the magazine by the mid-point of the joining portion between two rings of a unit magazine portion, causing it to rise on the operative stroke, so that, once the operative cycle has terminated, the rod descends to its lowermost rest position wherein the head thereof is separated from its vertical path, slightly separated from the magazine, so as to allow the free passage of the latter to supply a new unit magazine portion for a new operative cycle.

4.- A tying machine according to claims 1 and 3, characterized in that the said preformed slip knot throttling means is formed by two like essentially flat vertical lateral throttling members, each of which may rotate about one vertical edge around a vertical axis from an initial rest position, wherein it is outwardly separated from the magazine support plate, to an operative position in which it is substantially engaged against said support plate and in which it presses the upper edge of the magazine against the support plate by way of an adjustable pressure pin arranged therebehind, and in that it also comprises in the vertical edge thereof opposite that of rotation a vertical slot in which there is inserted one portion of the string when this is raised during the operative stroke by the hook or the plurality of hooks of the vertically movable pulling rod head, said slot being sufficiently wide to allow the easy passage of the string but sufficiently narrow to prevent the passage of the corresponding slip knot.

5.- A tying machine according to claim 1, characterized in that the said purge means for the excess material outside each knot is formed by a purge member, having a dihedral angle or similar to that of the vertical plate of the support and haul-off means, arranged therebehind, attached to the vertically movable rod of the pulling means and, therefore, movable also vertically with the rod slightly spaced from the rear concave portion of the said vertical plate, each wing of said purge member being provided with a V-shaped upper edge, and from the lower apex of which there extends a short vertical slot, there being formed below the latter a large orifice, separated from the slot, said purge member being adapted so that it moves upwardly from an initial rest position in which its upper edge is below the feed plane of the sausage and after insertion of the ends of the latter through the openings of the magazine support plate and through the magazine itself, together with the pulling rod, strangling the excess portions of the end of the sausage outside the slip knots, between the orifices of the magazine support plate and the slots of the purge member, until the material contained in the sausages skin in said excess portions is expelled from the skin and falls by gravity behind said purge member and after the bottom of the slots of the latter moves beyond the upper edge of the openings of the magazine support plate, the now empty ends of the sausage skin are inserted between the vertical magazine support plate and the purge member, until when the orifices of the latter are aligned with the openings of the support plate at the end of the upward movement of the pulling rod and of the purge member, said empty skin ends are left free within said orifices and openings.

6.- A tying machine according to claim 5 characterized in that each wing of the purge member is formed on the rear surface thereof with respective sausage insertion stops, which in the rest position face the respective insertion openings for the ends of the sausage.

7.- A magazine for the machine for tying strings on the ends of sausages, according to claims 1 to 6, characterized in that it comprises a sheet-like roll supporting the string, formed preferably by a web of a material such as paper or the like, having two series of perforations, the first series of which is formed by large equal size orifices having a transverse dimension slightly smaller than the width of the web, disposed close to the longitudinal edges of the latter and mutually adjacent and equidistant, while the other series of perforations is formed by small orifices disposed preferably in pairs between each pair of orifices of the first series, said small orifices being adapted to receive corresponding pins of the magazine roll feed devices.

8.- A magazine according to claim 7, characterized in that the string is disposed preferably in equal cut lengths, each of which is adhered to the support roll web, with two circumferential portions surrounding two adjacent orifices of the first series, just on the edge thereof, with a joining portion between both circumferential portions and having respective tangential free end portions extending outwardly from each orifice, there being formed by the piece of string itself, in the connection between the joining portion and each free end portion, an ordinary slip knot, disposed such that the running portion is precisely the joining portion between both knots.

EP 0 344 388 A1

_FIG. 1_

_FIG. 2_

FIG. 3

FIG. 4

FIG. 5

FIG.6

FIG. 7

FIG. 9

FIG. 8

FIG.10

*FIG.11*

*FIG.12*

*FIG.13*

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4 ) |
|---|---|---|---|
| A | FR-A-2576751 (TURROQUES) --- | | A22C11/12 |
| A | FR-A-2563183 (CHARLES) --- | | |
| A,D | EP-A-0010937 (BARROSO) & ES-A-475086 --- | | |
| A,D | FR-A-1440657 (BARROSO) & ES-A-295446 --- | | |
| A | DE-B-2352000 (NIEDECKER) --- | | |
| A | DE-A-2361981 (BIERHALTER) ----- | | |

TECHNICAL FIELDS
SEARCHED (Int. Cl.4 )

A22C

The present search report has been drawn up for all claims

| Place of search | Date of completion of the search | Examiner |
|---|---|---|
| THE HAGUE | 6 FEBRUARY 1989 | VON ARX V.U. |

EPO FORM 1503 03.82 (P0401)